# EUROPEAN PATENT SPECIFICATION

(11) **EP 3 002 451 B1**
(45) Date of publication and mention of the grant of the patent: **20.03.2019**
(21) Application number: 14290294.9
(22) Date of filing: 01.10.2014
(51) Int. Cl.: F03B 1/00, F03B 1/02

(54) **PELTON TURBINE WHEEL, PELTON TURBINE COMPRISING SUCH A WHEEL AND INSTALLATION FOR CONVERTING HYDRAULIC ENERGY INTO MECHANICAL OR ELECTRICAL ENERGY**
Peltonturbinenrad, Peltonturbine mit einem solchen Rad und Installation zur Umwandlung von hydraulischer Energie in mechanische oder elektrische Energie
Roue de turbine Pelton, turbine Pelton comprenant une telle roue et installation de conversion d'énergie hydraulique en énergie mécanique ou électrique

(43) Date of publication of application: 06.04.2016
(73) Proprietor: GE Renewable Technologies, 38100 Grenoble (FR)
(72) Inventor: Bertea, Jean-François, 07300 Saint Jean de Muzols (FR); Bedrossian, Jonathan, 38000 Grenoble (FR)
(74) Representative: Brannen, Joseph Waclaw

(56) References cited:
- WO-A1-99/49213
- CH-A- 111 442
- CN-Y- 2 729 357
- US-A- 611 769

## Description

The invention concerns a Pelton turbine wheel and a Pelton turbine comprising such a wheel. The invention also concerns an installation for converting hydraulic energy into mechanical or electrical energy including such a Pelton turbine.

Pelton turbines are conventionally used for transforming the kinetic energy of a fluid, such as falling water, into mechanical energy. Pelton turbines include a wheel comprising a central rim that is adapted to be secured to a shaft. The rim supports several bowl shaped buckets that are bowl shaped. One or more water injectors are arranged on the periphery of the wheel and generate water jets that impact each a bucket of the wheel, thereby inducing the wheel rotation.

In traditional Pelton turbine wheels, the buckets are attached to the rim at one extremity. The centrifugal forces and the power of the water jets emitted by the injectors mechanically stress the connection between the buckets and the rim. The wheel then suffers from important damages due to fatigue.

To overcome this drawback, it is known from WO-A-9949213 to equip the Pelton turbine wheel with a rim in two parts and with two annular flanges that are each integral with a part of the rim. Each annular flange delimits openings for receiving the buckets of the wheel. The buckets are then held within the openings of the annular flanges. More precisely, the outer convex surface of the buckets is in contact with the annular flanges. Consequently, the load is transmitted from the outer convex surface of the buckets to the rim and the connection between the buckets and the rim is less stressed by external loads.

Nevertheless, due to the deflections of buckets and of annular flanges under the force of water jets and centrifugal force, the buckets may slightly move on the annular flanges, thereby inducing friction and wear of the flanges and of the outer convex surface of the buckets. This reduces the life time of the turbine and may lead to long and expensive outages because flanges are components difficult to repair.

The invention intends to overcome these drawbacks by proposing a Pelton turbine wheel having an extended lifetime.

To this end, the invention concerns a Pelton turbine wheel, comprising a rim, buckets distributed on the periphery of the rim, at least one annular flange secured around the rim and provided with openings for receiving the buckets, the buckets having each an outer convex surface facing a wall of the opening. According to the invention, the wheel further comprises wearing plates interposed between the outer convex surface of the buckets and the wall of the openings.

Thanks to the invention, the wearing plates limit friction between the or each flange and the buckets. This reduces the damages due to fatigue and extends the lifetime of the Pelton turbine wheel.

Further aspects that are advantageous but not compulsory are specified below:
- Each wearing plate is in contact with a plane portion of the outer convex surface of a bucket.
- Each wearing plate is housed in a recess delimited in the wall of the openings.
- The wheel includes fastening means for fastening the wearing plates to the or each annular flange.
- The fastening means include at least a screw that is engaged through a hole of the wearing plates and in a threaded hole of a flange, and a pin that is engaged through a hole of the wearing plates and in a housing of the flange.
- The wheel includes two annular flanges facing each other.
- The buckets protrude each on either sides of the annular flanges.
- Each bucket is provided with at least one threaded hole for receiving a locking screw.
- Each bucket includes two bowls joined together, each bowl having a threaded hole for receiving the locking screw.
- Each bucket includes an ear for attaching to the rim.
- The wearing plates are manufactured in a low friction material.
- The wearing plates include an overlay in low friction material.
- The wearing plates are coated with a low friction material.

The invention also concerns a Pelton turbine comprising a wheel as previously defined and an installation for converting hydraulic energy into mechanical or electrical energy including such a Pelton turbine.

The invention will now be explained in correspondence with the annexed figures, and as an illustrative example, without restricting the object of the invention. In the figures:
- figure 1 is a half-cut view of a Pelton turbine wheel according to the invention, where a bucket, an annular flange and a rim of the wheel are partially cut,
- figure 2 is an enlarged view of detail II of figure 1,
- figure 3 is a cut according to line III-III of figure 2, and
- figure 4 is an enlarged view of detail IV of figure 3.

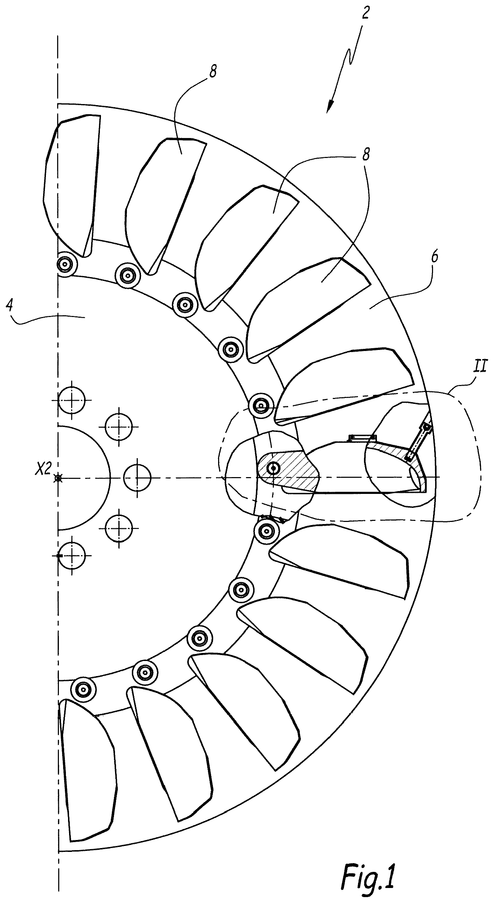

Figures 1 to 4 represent a Pelton turbine wheel 2 adapted to be fitted in a Pelton turbine. For the clarity of the drawing, only one half of the wheel 2 is represented on figure 1. In practice, this Pelton turbine is integrated in a non-represented installation for converting hydraulic energy into mechanical or electrical energy. Pelton turbine wheel 2 is centered on a rotation axis X2 and includes a central rim 4 that is provided to be secured to a non-represented shaft for transferring rotational movement of the wheel 2. This shaft may be connected to a rotor of a generator, so as to produce electricity, or may power any mechanical device. The rim 4 may be in one or more parts. In the considered embodiment, the rim 4 is in two parts, adapted to be attached to one another.

A plurality of buckets 8 are evenly distributed, in a circular pattern, on the periphery of the rim 4. The buckets 8 have a bowl shape. One or more non-represented water injectors are in practice distributed around the wheel 2, in such manner that they each produce a water jet that globally impacts a bucket 8 in a tangential direction relative to the wheel 2. This induces the wheel 2 to rotate around axis X2. For instance, the water injectors may use the potential energy of a water fall to generate the water jets.

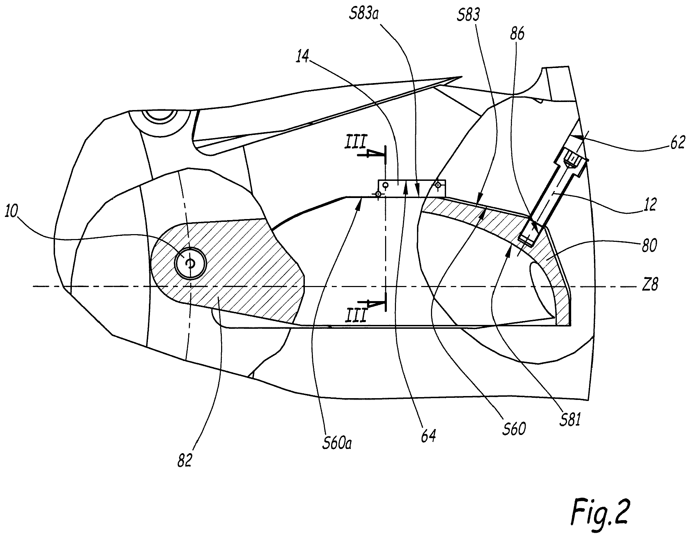

As shown figure 2, each bucket 8 extends globally along an axis Z8 that is radial to axis X2. Each bucket 8 includes an ear 82 for attachment to the rim 4. More precisely, the ear 82 delimits an orifice through which a pin 10 is inserted. The pin 10 is slightly conical and is configured to be inserted in a non-represented split sleeve of complementary shape. The pin 10 is then immobilized within the ear orifice by wedge effect.

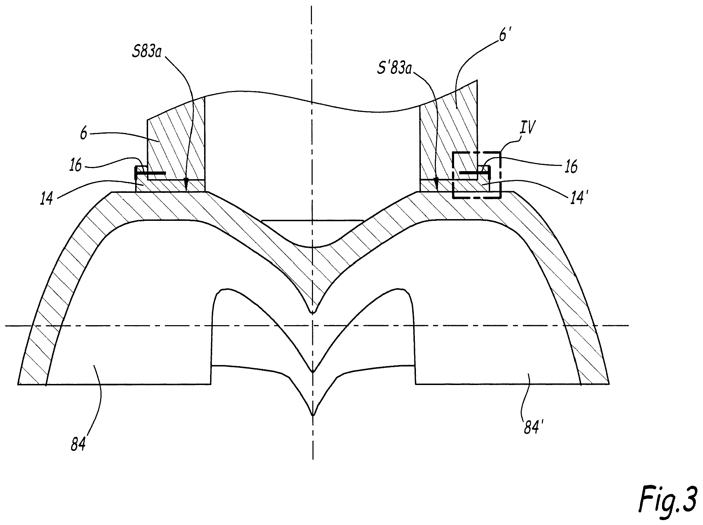

As shown on figure 3, each bucket 8 includes two bowls 84 and 84' which are joined together. Each bucket 8 has an inner convex surface S81 that is impacted by water jets in operating conditions and an outer convex surface S83. The outer convex surface S83 includes two flat portions S83a and S'83a, respectively delimited by the bowls 84 and 84'. These flat portions S83a and S'83a may be better known as the "rails" of the bucket 8. The flat portions S83a and S'83a are parallel to axis Z8 and are located at the back the bucket 8, in the configuration of figure 2.

The Pelton turbine wheel 2 further includes two annular flanges 6 and 6' that are both secured around the rim 4 and that face each other. More precisely, the flange 6 is integral with a part of the rim 4 while the flange 6' is integral with the other part of the rim 4. In practice, the two flanges 6 and 6' are attached to each other by means of the pins 10. Furthermore, in assembled state of the wheel 2 on the shaft, stud bolts connect the two parts of the rim 4 to the shaft and contribute in holding the two parts of the rim 4 together. The flanges 6 are centred on axis X2, this axis X2 being perpendicular to the thickness of the flanges 6 and 6'. The flanges 6 and 6' are offset in relation to each other in the direction of the axis X2. The flanges 6 and 6' each delimit several openings 60 for receiving and holding the buckets 8. The flanges 6 and 6' allow reducing the load applied at the connection between the rim 4 and the buckets 8 in operating conditions, as a part of the load is supported by the flanges 6 and 6'. This load includes centrifugal forces and water jets force.

The bowls 84 and 84' of the buckets 8 protrude each respectively on either sides of the flanges 6 and 6'. S60 denotes a convex wall of the openings 60. The convex walls S60 are of complementary shape to the corresponding convex surface S83 of a bucket 8.

In the present document, it is assumed that a convex surface or a convex wall may include a flat portion. For instance, the outer convex surface S83 of the buckets 8 includes two flat portions S83a and S'83a and the convex wall S60 of the openings 60 includes a flat portion S60a facing the rail S83a or S'83a.

In practice, the water injectors are arranged so as to propel water between the two flanges 6 and 6'. The water jet losses then its kinetic energy when contacting the bucket 8 and flows along the internal convex surface S81 on the sides of wheel 2, that is outside the volume delimited between flanges 6 and 6'.

80 denotes a radial outer end portion of the bucket 8. The end portion 80 is arranged, relative to the ear 82, at the opposite side of the bucket 8 along axis Z8. In other words, the end portion 80 is the portion of the bucket 8 that is radially the farthest from the rim 4. Similarly to FR-A-2 802 247, the bucket portion 80 delimits two threaded holes, among which one is shown on figure 2, with reference 86. One threaded hole 86 is delimited on each bowl 84 and 84'. Each threaded hole 86 is adapted to receive a locking screw 12 for slightly pivoting the bucket 8 within opening 60 and around the pin 10. Each locking screw 12 is inserted through a hole 62 delimited in the coupling flange 6 or 6'. As shown figure 2, the holes 62 and 86 extend along an axis that is inclined relative to the axis Z8.

When tightening the locking screw 12, the bucket 8 is pivoted around the pin 10 and comes into abutment against the flat portion S60a of the wall S60 of the opening 60, that is the wall portion of the flanges 6 and 6' facing the rail S83a or S'83a. A clearance always remains between the end portion 80 of the buckets and the opening wall S60. As a matter of fact, a washer is arranged around the screw 12 to prevent the end portion 80 from contacting the wall S60. However, micro-displacements may still occur under the force of the water jet, thereby inducing friction forces between the buckets 8 and the flanges 6 and 6'.

To avoid premature wear of the flanges 6 and 6' because of friction, the wheel 2 further includes wearing plates 14 and 14' that have a rectangular section and that are respectively interposed between each bucket 8 and the two flanges 6 and 6', that is between bowl 84 and flange 6 and between bowl 84' and flange 6'. More precisely, the wearing plates 14 and 14' contact respectively the flat portions S83a and S'83a of the outer convex surface of the bowls 84 and 84'. The wearing plates 14 and 14' contact then the back of the bucket 8 in the configuration of figure 2. The wearing plates 14 and 14' are parallel to axis Z8 and are each housed in a recess 64 of complementary shape, delimited in the wall S60 of the openings 60. The wearing plates 14 and 14' are then squeezed between the buckets 8 and the openings walls S60 of the flanges 6 and 6'.

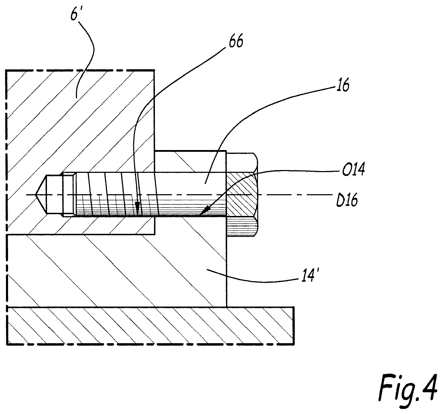

As shown on figures 3 and 4, the wearing plates 14 and 14' are each respectively fastened to the flanges 6 and 6'. Indeed, the wearing plates 14 and 14' delimit each a hole 014 for receiving a screw 16. The screws 16 engage each a threaded hole 66 formed in the flange 6 and 6'. The screws 16 are engaged through the holes 014 along a direction D16 parallel to the rotation axis X2 of the wheel 2. The threaded holes 66 are formed on the external surface of the flanges 6 and 6', that is the annular surface respectively facing away from the opposite flange 6' or 6. At least one non-represented pin is also used to support induced shear forces. This pin goes through a non-represented hole of the wearing plate 14 or 14' and engage in a housing of the flange 6 or 6'. In practice, at least one screw and one pin are necessary to attach the wearing plates 14 and 14' to the flange 6 or 6'.

The wearing plates 14 are manufactured in a low friction material, such as ceramic. The wearing plates may also include a coating or an overlay made of a low friction material, such as ceramic. As a result, the wearing plates absorb friction forces arising from buckets micro-displacements due to water jet power. Consequently, the flanges wear is reduced over time and the life time of the Pelton turbine wheel 2 is extended.

In a non-represented alternative embodiment, the Pelton turbine wheel includes only one annular flange that is secured to a one-piece rim. The Pelton turbine wheel may also include more than two flanges. Then the number of wearing plates is adapted.

In a non-represented alternative embodiment, the wearing plates 14 and 14' are not parallel to axis Z8 but curved, with a curvature complementary to that of the outer convex surface S83 of the bucket 8. In particular, the wearing plates 14 and 14' may cover the whole outer convex surface S83.

The flanges 6 and 6' may also be secured around a one-piece rim.

The technical features of the different embodiments and alternative embodiments of the invention described here-above can be combined together, in order to generate new embodiments of the invention.

## Claims

1. Pelton turbine wheel (2), comprising:
- a rim (4),
- buckets (8) distributed on the periphery of the rim,
- at least one annular flange (6,6') secured around the rim and provided with openings (60) for receiving the buckets, the buckets having each an outer convex surface (S83) facing a wall (S60) of the opening,
**characterized in that** the wheel (2) further comprises wearing plates (14, 14') interposed between the outer convex surface (S83) of the buckets (8) and the wall (S60) of the openings (60).

2. Wheel according to claim 1, **characterized in that** each wearing plate (14, 14') is in contact with a plane portion (S83a, S'83a) of the outer convex surface (S83) of a bucket (8).

3. Wheel according to claim 1 or 2, **characterized in that** each wearing plate (14, 14') is housed in a recess (64) delimited in the wall (S60) of the openings (60).

4. Wheel according to any previous claim, **characterized in that** it includes fastening means (16,014,66) for fastening the wearing plates (14,14') to the or each annular flange (6,6').

5. Wheel according to claim 4, **characterized in that** the fastening means include at least:
- a screw (16) that is engaged through a hole (014) of the wearing plates (14, 14') and in a threaded hole (66) of a flange (6,6'), and
- a pin that is engaged through a hole of the wearing plates (14, 14') and in a housing of the flange (6,6').

6. Wheel according to any previous claim, **characterized in that** it includes two annular flanges (6,6') facing each other.

7. Wheel according to claim 6, **characterized in that** the buckets (8) protrude each on either sides of the annular flanges (6, 6').

8. Wheel according to any previous claim, **characterized in that** each bucket (8) is provided with at least one threaded hole (86) for receiving a locking screw (12).

9. Wheel according to claim 8, **characterized in that** each bucket includes two bowls (84, 84') joined together, each bowl having a threaded hole (86) for receiving the locking screw (12).

10. Wheel according to any previous claim, **characterized in that** each bucket (8) includes an ear (82) for attaching to the rim (4).

11. Wheel according to any previous claim, **characterized in that** the wearing plates (14, 14') are manufactured in a low friction material.

12. Wheel according to any claim 1 to 10, **characterized in that** the wearing plates (14, 14') include an overlay in low friction material.

13. Wheel according to any claim 1 to 10, **characterized in that** the wearing plates (14, 14') are coated with a low friction material.

14. Pelton turbine, **characterized in that** it includes a wheel (2) according to any previous claim.

15. Installation for converting hydraulic energy into mechanical or electrical energy, **characterized in that** it includes a Pelton turbine according to claim 14.

## Patentansprüche

1. Peltonturbinenrad (2), umfassend:
- eine Felge (4),
- Behälter (8), die auf der Peripherie der Felge verteilt sind,
- mindestens einen ringförmigen Flansch (6, 6'), der um die Felge herum gesichert und mit Öffnungen (60) zur Aufnahme der Behälter versehen ist, wobei die Behälter jeweils eine äußere konvexe Oberfläche (S83) aufweisen, die zu einer Wand (S60) der Öffnung zeigt,
**dadurch gekennzeichnet, dass** das Rad (2) weiter Abnutzungsplatten (14, 14') umfasst, die zwischen die äußeren konvexen Oberfläche (S83) der Behälter (8) und die Wand (S60) der Öffnungen (60) zwischengesetzt sind.

2. Rad nach Anspruch 1, **dadurch gekennzeichnet, dass** jede Abnutzungsplatte (14, 14') in Kontakt mit einem ebenen Bereich (S83a, S'83a) der äußeren konvexen Oberfläche (S83) eines Behälters (8) steht.

3. Rad nach Anspruch 1 oder 2, **dadurch gekennzeichnet, dass** jede Abnutzungsplatte (14, 14') in einer Aussparung (64), die in der Wand (S60) der Öffnungen (60) begrenzt ist, beherbergt ist.

4. Rad nach einem der vorstehenden Ansprüche, **dadurch gekennzeichnet, dass** es Befestigungsmittel (16, 014, 66) zum Befestigen der Abnutzungsplatten (14, 14') an dem oder jedem ringförmigen Flansch (6, 6') beinhaltet.

5. Rad nach Anspruch 4, **dadurch gekennzeichnet, dass** die Befestigungsmittel mindestens Folgendes beinhalten:
- eine Schraube (16), die durch ein Loch (014) der Abnutzungsplatten (14, 14') und in ein Gewindeloch (66) eines Flanschs (6, 6') eingreift, und
- einen Stift, der durch ein Loch der Abnutzungsplatten (14, 14') und in ein Gehäuse des Flanschs (6, 6') eingreift.

6. Rad nach einem der vorstehenden Ansprüche, **dadurch gekennzeichnet, dass** es zwei ringförmige Flansche (6, 6') beinhaltet, die zu einander zeigen.

7. Rad nach Anspruch 6, **dadurch gekennzeichnet, dass** die Behälter (8) jeweils auf beiden Seiten der ringförmigen Flansche (6, 6') hervorstehen.

8. Rad nach einem der vorstehenden Ansprüche, **dadurch gekennzeichnet, dass** jeder Behälter (8) mit mindestens einem Gewindeloch (86) zur Aufnahme einer Verriegelungsschraube (12) versehen ist.

9. Rad nach Anspruch 8, **dadurch gekennzeichnet, dass** jeder Behälter zwei an einander gefügte Schalen (84, 84') beinhaltet, wobei jede Schale ein Gewindeloch (86) zur Aufnahme der Verriegelungsschraube (12) aufweist.

10. Rad nach einem der vorstehenden Ansprüche, **dadurch gekennzeichnet, dass** jeder Behälter (8) ein Ohr (82) zur Befestigung an der Felge (4) beinhaltet.

11. Rad nach einem der vorstehenden Ansprüche, **dadurch gekennzeichnet, dass** die Abnutzungsplatten (14, 14') aus einem Material mit geringer Reibung hergestellt sind.

12. Rad nach einem der Ansprüche 1 bis 10, **dadurch gekennzeichnet, dass** die Abnutzungsplatten (14, 14') einen Überzug aus Material mit geringer Reibung umfassen.

13. Rad nach einem der Ansprüche 1 bis 10, **dadurch gekennzeichnet, dass** die Abnutzungsplatten (14, 14') mit einem Material mit geringer Reibung beschichtet sind.

14. Peltonturbine, **dadurch gekennzeichnet, dass** sie ein Rad (2) nach einem der vorstehenden Ansprüche beinhaltet.

15. Installation zum Umwandeln einer hydraulischen Energie in mechanische oder elektrische Energie, **dadurch gekennzeichnet, dass** sie eine Peltonturbine nach Anspruch 14 umfasst.

## Revendications

1. Roue de turbine Pelton (2), comprenant :
- une jante (4),
- des augets (8) distribués sur la périphérie de la jante,
- au moins une bride annulaire (6, 6') fixée autour de la jante et dotée d'ouvertures (60) pour la réception des augets, les augets ayant chacun une surface convexe extérieure (S83) faisant face à une paroi (S60) de l'ouverture,
**caractérisée en ce que** la roue (2) comprend en outre des plaques d'usure (14, 14') interposées entre la surface convexe extérieure (S83) des augets (8) et la paroi (S60) des ouvertures (60).

2. Roue selon la revendication 1, **caractérisée en ce que** chaque plaque d'usure (14, 14') est en contact avec une portion plane (S83a, S'83a) de la surface convexe extérieure (S83) d'un auget (8).

3. Roue selon la revendication 1 ou 2, **caractérisée en ce que** chaque plaque d'usure (14, 14') est logée dans un évidement (64) délimité dans la paroi (S60) des ouvertures (60).

4. Roue selon l'une quelconque des revendications précédentes, **caractérisée en ce qu'**elle inclut des moyens de fixation (16, 014, 66) pour la fixation des plaques d'usure (14, 14') à la ou à chaque bride annulaire (6, 6').

5. Roue selon la revendication 4, **caractérisée en ce que** les moyens de fixation incluent au moins :
- une vis (16) qui vient en prise à travers un trou (014) des plaques d'usure (14, 14') et dans un trou taraudé (66) d'une bride (6, 6'), et
- une broche qui vient en prise à travers un trou des plaques d'usure (14, 14') et dans un logement de la bride (6, 6').

6. Roue selon l'une quelconque des revendications précédentes, **caractérisée en ce qu'**elle inclut deux brides annulaires (6, 6') en regard l'une de l'autre.

7. Roue selon la revendication 6, **caractérisée en ce que** les augets (8) font chacun saillie de part et d'autre des brides annulaires (6, 6').

8. Roue selon l'une quelconque des revendications précédentes, **caractérisée en ce que** chaque auget (8) est doté d'au moins un trou taraudé (86) pour la réception d'une vis de verrouillage (12).

9. Roue selon la revendication 8, **caractérisée en ce que** chaque auget inclut deux bols (84, 84') reliés l'un à l'autre, chaque bol ayant un trou taraudé (86) pour la réception de la vis de verrouillage (12).

10. Roue selon l'une quelconque des revendications précédentes, **caractérisée en ce que** chaque auget (8) inclut une oreille (82) pour la fixation à la jante (4).

11. Roue selon l'une quelconque des revendications précédentes, **caractérisée en ce que** les plaques d'usure (14, 14') sont fabriquées en un matériau à faible frottement.

12. Roue selon l'une quelconque des revendications 1 à 10, **caractérisée en ce que** les plaques d'usure (14, 14') incluent un revêtement en matériau à faible frottement.

13. Roue selon l'une quelconque des revendications 1 à 10, **caractérisée en ce que** les plaques d'usure (14, 14') sont revêtues d'un matériau à faible frottement.

14. Turbine Pelton, **caractérisée en ce qu'**elle inclut une roue (2) selon l'une quelconque des revendications précédentes.

15. Installation de conversion d'énergie hydraulique en énergie mécanique ou électrique, **caractérisée en ce qu'**elle inclut une turbine Pelton selon la revendication 14.
